# EUROPEAN PATENT APPLICATION

(11) **EP 0 994 591 A2**
(43) Date of publication of application: **19.04.2000**
(21) Application number: 99307335.2
(22) Date of filing: 16.09.1999
(51) Int. Cl.: H04J 3/08

(54) **SDH protection optimized for data networking**

(30) Priority: 15.10.1998 US 173584
(71) Applicant: NORTEL NETWORKS CORPORATION, Montreal, Quebec H2Y 3Y4 (CA)
(72) Inventor: Russel, John Paul, Sawbridgeworth, Hertfordshire CM21 9BB (GB); Goodman, David Michael, St Albans, Hertfordshire AL4 9XA (GB); Murton, Christopher David, Chelmsford, Essex CM2 8AR (GB); Ramsden, Christopher Thomas William, Hertford, Hertfordshire SG14 3ES (GB); Shields, James, Ottawa, Ontario K1G 4R9 (CA)
(74) Representative: Bewley, Ewan Stuart

(57) **Abstract**

A protection method for providing integrity of transport of a data packet stream over a plurality of synchronous digital channels each comprising a virtual container stream, the virtual container streams being virtually concatenated together is disclosed. Data packets from a data stream are mapped to a plurality of memory areas, from which the data packets are transferred to payloads of a plurality of virtual container streams which are carried over a synchronous digital network by a plurality of different routes, being either path connections or rings. Upon failure of a path or section, a receiving entity signals to a transmitting synchronous digital entity via conventional path or section termination signaling functions to alert the transmitting entity of a failure in a path or section. Upon receiving a path or ring failure signal, the transmitting entity gracefully degrades to offer a reduced bandwidth.

## Description

### Field of the Invention

The present invention relates to synchronous networks and in particular to channel protection in synchronous networks.

### Background to the Invention

Conventional synchronous digital telecommunications networks include the synchronous digital hierarchy (SDH) networks incorporating the North American Synchronous Optical Network (SONET) networks, operating in accordance with International Telecommunication Union (ITU-T) recommendation G.707 and related standards. In the applicant's previous disclosures entitled "Payload Mapping in Synchronous Networks" reference ID 0889 filed at the US Patent Office, and "Frame Based Data Transmission Over Synchronous Digital Hierarchy Network", reference ID 0882 filed at the US Patent Office and "Concatenation of Containers in Synchronous Digital Hierarchy Network", reference ID 1048 filed at the US Patent Office, the contents of which are incorporated herein by reference, there is disclosed methods and apparatus for carrying data traffic within a set of virtually concatenated virtual containers, to achieve efficient transport of data packets which are at data rates other than those specified in the ITU-T recommendations for virtual containers, by multiplexing a data channel at a first (higher) data rate into a plurality of virtual containers which are virtually concatenated together, each virtual container being at a second (lower) data rate and without encapsulating the data channel within any intermediate protocols within the payloads of the virtual containers. In the applicant's prior disclosures, the methods and apparatus disclosed may enable the high data rate capacities which have previously been available in the prior art in what have historically been known as local area networks (LANs) but over a wider geographical area, of the order of hundreds of kilometers or greater which have conventionally been the preserve of conventional wide area networks (WANs).

In the applicant's previous disclosures, it is shown how to incorporate an OSI layer 2 frame based data channel, for example operating in accordance with IEEE standard 802.3, and including conventional Ethernet IEEE 802.1 systems, conventional token ring systems, conventional token bus systems, fiber distributed data interface (FDDI) systems and dual queue dual bus (DQDB) systems, into a plurality of SDH virtual containers. The conventional IEEE 802.3 systems incorporate their own protection mechanisms in the event of problems occurring in the physical layer. Thus, in transporting IEEE 802.3 data or any other type of frame based data over SDH as disclosed in the applicant's aforementioned previous disclosures, faults in the SDH system may be protected at whichever layer is being transported over the SDH network in the virtually concatenated virtual containers (eg at the OSI layer 2). An example of such protection is Carrier Sense Multiple Access Ring Node (CSMA-RN) protection. However, such protection is relatively slow to re-route and may take of the order of several seconds to operate.

Within the known SDH networks, there exist prior art path and ring protection modes which are faster to operate than OSI layer 2 protection, for overcoming faults in the physical layer. The following gives an example of their operation:

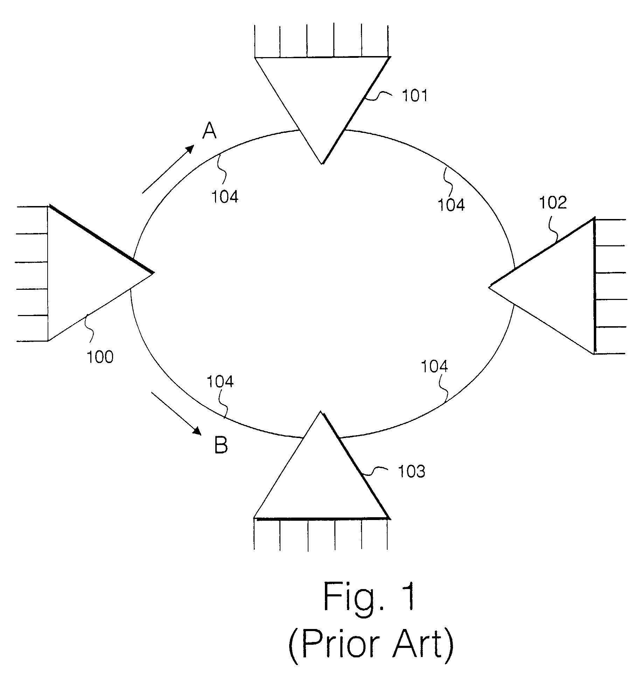

Referring to Fig. 1 herein, there is illustrated schematically a prior art synchronous digital hierarchy ring comprising first to fourth multiplexers 100-103 linked by a fiber ring 104. A prior art mode of path protection in the known SDH network is as follows. SDH is a circuit based protocol in which channels are permanently assigned between source node and destination nodes. In Fig. 1 herein, data transmitted from source node 100 to destination node 102 is transmitted by two different paths, A and B. The same data is transmitted over each path A and B from source node 100 to destination node 102. Data traveling from the source node to the destination node over the first path A travels over a first set of individual fibers and intermediate node equipment 101 to destination node 102. The same data is transmitted over second path B over a second set of fibers and intermediate node equipment 103. In the event of a failure of either a fiber or a node equipment on either of the first or second paths, since there is inherent redundancy in the system, ie the same data is duplicated and is simultaneously transported over two independent paths, reliability of transmission can be maintained under conditions of a fault on a fiber or node equipment in either path. In the event of a failure on one of the paths, the integrity of data transmitted via the other path is maintained. It will be appreciated by the skilled person that the network illustrated in Fig. 1 herein is simplified, and in practice a path may traverse many nodes, rings or links of an SDH network.

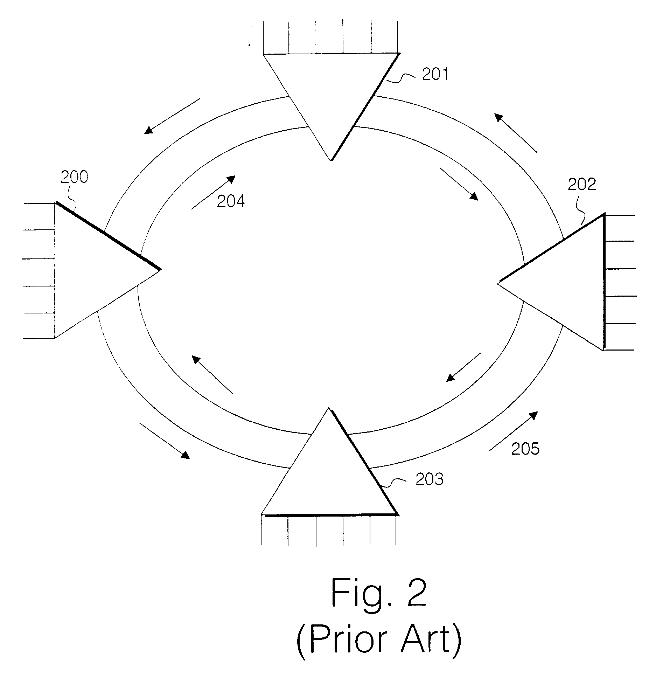

Referring to Fig. 2 herein, there is illustrated schematically a second form of protection in a prior art SDH network in which first and second rings are formed over a plurality of sections linking individual multiplexer node elements 200-203. On each section between communicating node elements, data is transmitted on a pair of independent fibers. Between a source node 200 and a destination node 202, data is transmitted over individual sections in a first, clockwise direction 204 on a first set of fibers, and in a reverse direction 205 in a second, anti-clockwise direction over a second set of fibers.

The data is transmitted via first and second rings having corresponding respective first and second traffic flow directions, the directions being opposite to each other. If a failure of any individual fiber or node between the source and destination node occurs, the data is received at the destination node via the other ring which does not have a fault. For example, if node 201 fails, the data transmitted from source node 200 via intermediate node 201 to destination node 202 in first direction 204 fails. However, since the same data is also transmitted via the second ring from source node 200 via second intermediate node 203 to destination node 202, in second direction 205, reception of transmitted data at the destination node is maintained despite the failure.

In the above prior art SDH protection methods, the destination node end uses signal bytes which are in the conventional SDH overhead to determine which path or ring is providing the best received signals. The signals which are detected include the alarm indication status (AIS), and the payload defect indicator (PDI). Such prior art method is known as path protection, or sub-network connection protection.

The two protection modes shown in Figs. 1 and 2 herein illustrate prior art options provided in the ITU-T recommendations covering the synchronous digital hierarchy system. Usage of such protection is not obligatory, however, to maintain the SDH levels of availability which are required in the various ITU-T recommendations, such path or ring protection is commonly used.

### Summary of the Invention

Specific embodiments and methods according to the present invention aim to provide a fast protection in the SDH domain for frame based data carried over a synchronous digital network.

Further, specific embodiments and methods according to the present invention aim to provide an improved protection system within synchronous digital hierarchy networks whereby under normal operation increased bandwidth communications are achieved, but under conditions of fault protection, a bandwidth utilization equivalent to conventional synchronous digital hierarchy networks is achieved.

Another object of the invention is to provide path protection for a high bitrate channel comprising a number of virtually concatenated synchronous paths each comprising a separate stream of virtual containers. A plurality of different streams of virtual containers are routed across different routes between a source node and a destination node. On failure of a path, a stream of virtual containers normally carried on the failed route are redirected over an intact route, but the bit rate capacity of the complete path is reduced.

In this manner, an SDH network may be used to provide protection between ports in a bandwidth effective manner by using the bursty nature of frame based traffic carried in a path comprising a plurality of virtually concatenated virtual container streams.

According to a first aspect of the present invention there is provided a method of transmitting a stream of data packets over a plurality of synchronous channels, said method comprising the steps of: inputting a first data packet having a first data rate to a first transmit memory area; mapping a said first data packet into a first virtual container stream at a second data rate, said second data rate being lower than said first data rate; transmitting said virtual container stream over a first synchronous channel; inputting a second data packet having said first data rate to a second transmit memory area; mapping said second data packet to a second stream of virtual containers, at said second data rate; and transmitting said second stream of virtual containers over a second synchronous channel; and regulating a rate of admission of said first and second data packets into said memory areas according to a data occupancy level of at least one said memory area.

Preferably, said step of mapping said first data packet into said first virtual container stream and said step of mapping said second data packet into said second virtual container stream occur in parallel. Preferably, said step of inputting a first data packet into said first transmit memory area and said step of inputting said second data packet into said second transmit memory area occur sequentially with each other.

A said data packet may be buffered in a first in first out buffer. The rate of admission of data packets into memory areas may be regulated when a data occupancy of a said memory area falls below a first pre-determined level, admitting a said data packet into said transmit memory area. When a data occupancy of said transmit memory area is above a second predetermined level, preventing admission of said data packets into said memory area may be prevented. A rate of admission of said first and second data packets into a said memory area may be regulated by generating a flow control signal in a form recognisable by a data packet source, for preventing said data packet source from transmitting a next packet to said transmit memory area. Transmission of said first stream of virtual containers over said first synchronous channel and transmission of said second stream of virtual containers over said synchronous channel may occur simultaneously and in parallel.

According to a second aspect of the present invention, there is provided a method of transmitting packet data of a first data rate over a plurality of synchronous channels each operating at a second data rate, wherein said second data rate is lower than said first data rate, said method comprising the steps of: receiving a stream of data packets each of said first data rate into a transmit memory area; mapping said stream of data packets into a plurality of streams of virtual containers each of said second data rate; transmitting said plurality of streams of virtual containers over a plurality of synchronous channels; wherein, under conditions of a fault occurring on a said synchronous channel, redirecting said stream of data packets over at least one remaining one of said plurality of synchronous channels, on which no faults occur.

The invention includes a method of transmitting a stream of data packets, each said data packet of a first data rate over a plurality of synchronous channels each operating at a second data rate, wherein said second data rate is lower than said first data rate, said method comprising the steps of: receiving a first set of data packets each of said first data rate into a first transmit memory area; mapping said first set of data packets into a first stream of virtual containers; transmitting said first stream of virtual containers over a first synchronous channel; receiving a second set of data packets into a second transmit memory area; mapping said second set of data packets into a second stream of virtual containers; transmitting said second stream of virtual containers over a second synchronous channel; wherein, under conditions of a fault occurring on said first synchronous channel, operating said steps of: in response to a received fault signal relating to a fault on said first synchronous channel; generating a flow control signal for preventing receipt of a next data packet into said first transmit memory area.

In response to said received fault signal, transferring said stored first data packet may be transferred from said first transmit memory area to said second transmit memory area. Suitably, said generated flow control signal is recognisable by a packet data source as a signal for interrupting a flow of data packets. Under fault conditions, the following steps may be operated: receiving said first and second sets of data packets into said second transmit memory area; mapping said first and second sets of data packets into said stream of second virtual containers; and transmitting said stream of second virtual containers over said second synchronous channel. Under said fault condition said method may comprise the steps of: generating a second flow control signal for controlling a flow of said first and second data packet sets into said second transmit memory area such that an average rate of receipt of said first and second data packets into said second transmit memory area is less than or equal to an average rate of output of said first and second data packets onto said second synchronous transmission channel.

According to a third aspect of the present invention there is provided a method of transmitting a stream of data packets over a plurality of synchronous channels, said method comprising the steps of: inputting a stream of data packets each having a first data rate, into a transmit memory area; storing said plurality of data packets in said transmit memory area; outputting said plurality of data packets from said transmit memory area onto a plurality of virtual container streams, each said virtual container stream operating at a second data rate, said second data rate being lower than said first data rate; receiving an egress flow control signal indicating congestion at a receive entity; in response to said egress flow control signal, generating an ingress flow control signal for controlling a rate of admission of said data packets into said transmit memory area.

According to a fourth aspect of the present invention, there is provided a method of receiving packet data over a plurality of synchronous data channels, said method comprising the steps of: receiving a first stream of virtual containers over a first synchronous channel, individual ones of said first stream of virtual containers each having a second data rate; storing a plurality of payloads of said first stream of virtual containers in a first receive memory area said plurality of payloads comprising a first complete data packet; outputting said first data packet at a first data rate greater than said second data rate of said first stream of virtual containers; receiving a second stream of virtual containers over a second synchronous channel, individual ones of said second stream of virtual containers each having a second data rate; storing a plurality of payloads of said second stream of virtual containers in a second receive memory area said plurality of payloads comprising a second complete data packet; and outputting said second data packet at a first data rate greater than said second data rate of said second set of virtual containers.

According to a fifth aspect of the present invention, there is provided a method of receiving packet data over a plurality of synchronous data channels, said method comprising the steps of: receiving a plurality of said data packets carried in a plurality of streams of virtual containers over said plurality of synchronous channels, each said virtual container stream having a second data rate; storing a plurality of payloads of said plurality of virtual containers in a memory area; reconstituting a said data packet from a said plurality of virtual container payloads; outputting said data packet onto a data packet network at a first data rate, said first data rate being higher than said second data rate; wherein, under conditions of a fault on at least one of said synchronous channels, operating the steps of: generating a fault indicator signal indicating a fault on said synchronous channel; transmitting said fault indicator signal over an intact synchronous channel on which no fault occurs.

According to a sixth aspect of the present invention, there is provided a method of receiving packet data over a plurality of synchronous data channels, said method comprising the steps of: receiving a plurality of streams of virtual containers over a plurality of synchronous channels, each said virtual container stream having a second data rate; storing a plurality of payloads of said virtual containers in a receive memory area; reconstituting a data packet from said plurality of stored virtual container payloads; outputting said reconstituted data packet, said data packet having a first data rate, said second data rate being higher than said second data rate; receiving a flow control signal from an external packet data network; upon receipt of said flow control signal from said external packet data network, generating an egress flow control signal; and transmitting said egress flow control signal over a synchronous channel.

According to a seventh aspect of the present invention, there is provided a method of communicating data over a synchronous network, said method comprising the steps of, under normal no-fault conditions: receiving a first stream of virtual containers over a first synchronous channel, said first stream of virtual containers received at a second data rate; storing payload data of said first stream of virtual containers until a complete data packet is received; outputting said data packet at a first data rate, said first data rate being greater than said second data rate of said first stream of virtual containers; receiving a second stream of virtual containers over a second synchronous channel, said stream of virtual containers received at said second bitrate; storing said payload data of said second stream of virtual containers until a complete data packet is received; outputting said second data packet at a first data rate, said first data rate being greater than said second data rate of said received second stream of virtual containers; and under conditions of a fault on said first synchronous channel, performing the steps of receiving said first stream of virtual containers and said second stream of virtual containers on said second synchronous channel; and outputting said first and second data packets at said first data rate, at less frequent intervals, than under said normal operating conditions.

The invention includes a method of transmitting packet data over a synchronous communications network said method comprising the steps of: storing a first data packet having a first data rate in a first transmit memory area; mapping a said stored data packet into a first virtual container stream at a second data rate, said second data rate being lower than said first data rate; transmitting said virtual container stream over a first synchronous channel; storing a second data packet having said first data rate into a second transmit memory area; mapping said second stored data packet to a second stream of virtual containers, said second stream of virtual containers being at said second data rate; and transmitting said second stream of virtual containers over a second synchronous channel, wherein transmission of said first stream of virtual containers over said first data channel and transmission of said second stream of virtual containers over said second synchronous channel occurs simultaneously and in parallel.

The invention includes a method of receiving packet data over a plurality of synchronous data channels in a synchronous communications network, said method comprising the steps of: receiving a first stream of virtual containers over a first synchronous channel, said first stream of virtual containers received at a second data rate storing payloads of said first stream of virtual containers in a first received memory area until a complete data packet is received; outputting said first data packet at a data rate greater than a said second data rate of said first stream of virtual containers; receiving a second stream of virtual containers over a second synchronous channel, said second stream of virtual containers received at said second data rate; storing payloads of said stream of virtual containers in a second receive memory area until a second complete data packet is received; and outputting said second data packet at a data rate greater than said second data rate of said second set of virtual containers.

The invention includes an interface apparatus for interfacing between a data packet network operating a plurality of data packets at a second data rate; and a synchronous network operating a plurality of virtual containers each having a first data rate, said interface apparatus comprising: a mapper means for mapping a stream of said data packets between said data packet network and said synchronous network; a buffer memory for storing said data packets between said data packet network and said plurality of synchronous channels; and means for generating a flow control signal recognisable for controlling a flow of said data packets.

Preferably, said buffer memory area comprises a plurality of separate transmit memory areas, each assigned to a corresponding respective synchronous channel, and a plurality of receive memory areas, each said receive memory area assigned to a corresponding respective synchronous channel.

Preferably, said buffer memory area comprises a plurality of memory areas; and said interface apparatus comprises a plurality of flow control signal generation means, wherein said flow control signal generation means operate to generate a flow control signal corresponding to a respective said memory area, whenever said corresponding respective memory area reaches a predetermined data occupancy level.

Preferably said buffer memory operates to generate a signal upon achieving a predetermined level of data occupancy.

### Brief Description of the Drawings

For a better understanding of the invention and to show how the same may be carried into effect, there will now be described by way of example only, specific embodiments, methods and processes according to the present invention with reference to the accompanying drawings in which:
Fig. 3 illustrates schematically a first specific implementation of the present invention in which a packet data stream is carried by first and second virtual container streams over first and second paths in a synchronous digital hierarchy network;
Fig. 4 illustrates schematically elements of a datacoms port card for transferring a data packet stream to a plurality of streams of virtual containers carried over a synchronous network;
Fig. 5 illustrates schematically a first mode of operation of the first specific implementation of Fig. 3;
Fig. 6 illustrates schematically transfer of data packets and flow control signaling within the datacoms port card illustrated with reference to Fig. 4 herein;
Fig. 7 illustrates schematically an overview of operation of the first specific implementation of fig. 3 under conditions of a fault occurring on a path;
Fig. 8 illustrates schematically a second specific implementation of the present invention in which a plurality of rings are used to transport first and second virtual container streams carrying a data packet stream over a synchronous network;
Fig. 9 illustrates schematically modes of operation of the second specific implementation of Fig. 8, under conditions of section failure, and under normal operation;
Fig. 10 illustrates schematically a practical implementation of integration of the datacoms port card of Fig. 4 herein into the multiplexer model of ITU-T recommendation G.783 for transport of a data packet stream over a plurality of VC-12 virtual containers;
Fig. 11 illustrates schematically a practical implementation of the datacoms port card of Fig. 4 within ITU-T recommendation G.783 multiplexer model for transport of a data packet stream within a plurality of VC-3 virtual container streams; and
Fig. 12 illustrates schematically a practical implemetation of a datacoms port card within a multiplexer model according to ITU-T recommendation G.783 for carrying a data packet stream over a plurality of VC-4 virtual container streams.

### Detailed Description of the Best Mode for Carrying Out the Invention

There will now be described by way of example the best mode contemplated by the inventors for carrying out the invention. In the following description numerous specific details are set forth in order to provide a thorough understanding of the present invention. It will be apparent however, to one skilled in the art, that the present invention may be practiced without limitation to these specific details. In other instances, well known methods and structures have not been described in detail so as not to unnecessarily obscure the present invention.

In the specific implementations of the present invention, data is transported from a source node to a destination node over two independent channels, each comprising separate lengths of fiber and node equipment. However, rather than duplicating data and sending the same data simultaneously over each separate > channel as in the prior art case, in the specific implementations disclosed herein, data is channel multiplexed as between two or more different channels between the source node and destination node under normal operation. Upon occurrence of a fault, which disables one of the channels, the data is re-routed over the remaining channel(s) at a reduced data rate. Thus, under normal operation, because the data is not duplicated as in the prior art case, the effective bitrate capacity of a plurality of channels between a source node and a destination node which can be utilized may be improved compared with the prior art SDH protection case. However, in the specific implementations of the present invention protection is maintained, albeit at a lower bitrate, when a fault occurs on one of the channels. Thus, for a channel carried over a plurality of virtually concatenated virtual containers, for example an OSI layer 2 channel, IEEE 802.3 standard channel or similar, the advantages of speed of protection available in the SDH domain may be applied, whilst achieving high bit rates and efficient usage of virtual container capacity.

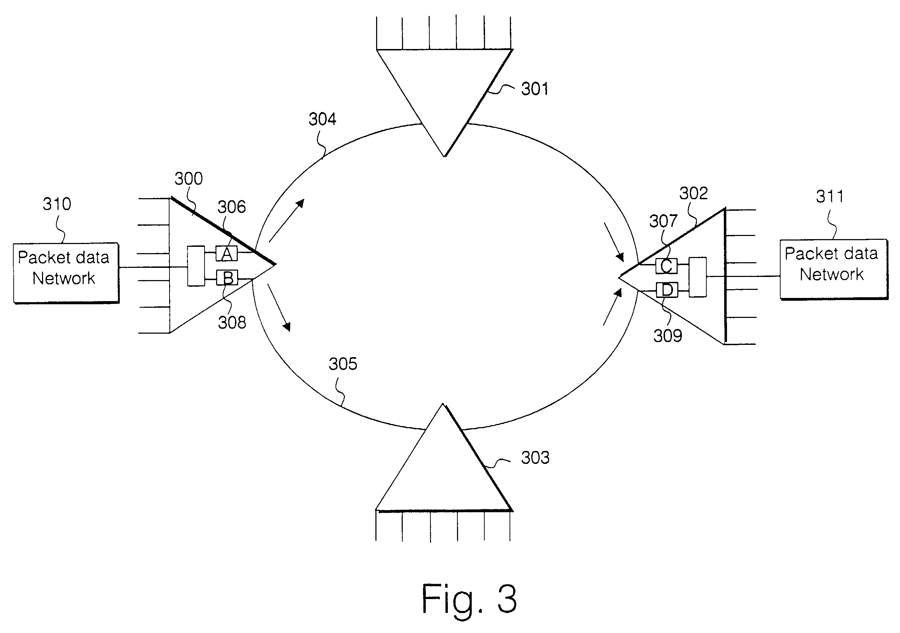

Referring to Fig. 3 of the accompanying drawings, there is illustrated schematically a first specific implementation according to the present invention. In the following examples transport of OSI layer 2 packet data over a synchronous digital hierarchy network will be described by way of illustration of the general methods and embodiments of the invention. However, the invention is not limited to carrying OSI layer 2 data but is more widely applicable to any data packets for frame based systems or protocols in which flow control of packets or frames can be exercised, and the invention is limited only by the scope of the claims herein.

In this specification, the term "packet" is defined as a block of data bytes having i a start indicator data indicating a start of said data block and an end indicator data indicating an end of said data block. A packet may have indeterminate, variable length, or may have fixed length. Examples of packets include Ethernet data frames and ATM cells. In this specification, a "packet" is capable of asynchronous transmission.

In this specification, the term "data packet network" refers to a network acting as a source or sink of data packets, and having the capability of transmitting data packets in an asynchronous mode. The data packet network is capable of regulating a rate of flow of data packets, or any individual data packet in response to a flow control signal. Examples of data packet networks include networks operating in accordance with IEEE 802.3, and Ethernet systems, and asynchronous transfer mode systems.

A synchronous digital hierarchy network comprises a plurality of synchronous nodes 300-303, each provided with a datacoms port card for inputting a stream of data packets at datacoms data rates. In general, datacoms data routes are different to conventional telecoms data rates, eg E1, T1, E3, STM-1, and in general different to prior art SDH virtual container data rates. In Fig. 3, individual single fibers are shown as supporting first and second SDH paths 304, 305 between a source node 300 and a destination node 302. Such paths are bi-directional, and in practice, node equipment is physically linked by at least two fibers, although for clarity in Fig. 3 only one fiber is shown, supporting transmitted data from transmitting entity at source node 300 to receive entity at destination node 302. A stream of data packets each having a first data rate from an external packet data network 310 is input to a first datacoms port card in a transmitting entity at source node 300 and multiplexed onto the synchronous network. At a receive entity at destination node 302, the transported data stream is received on a datacoms card of a receive entity at destination node 302, where the data packet stream is output onto a receiving external packet data network 311.

The datacoms port card adapts the datacoms data packets of the first data rate to a second, lower data rate which matches a data rate which can be multiplexed into a stream of virtual containers, and maps each data packet into one or more SDH virtual containers directly and without any further encapsulation in intermediate protocols. For example, a 10 MBits/s Ethernet channel may be mapped onto 5 VC-12 containers, each VC-12 container having a data rate of approximately 2 MBits/s. The 5 VC-12 containers are concatenated together to carry the 10 MBits/s Ethernet channel. As another example, for entry of a 100 MBits/s Ethernet channel into the synchronous network, a single 100 MBits/s Ethernet channel may be mapped into 2 virtually concatenated VC-3 container streams each having a bitrate capacity of approximately 50 MBits/s. Similarly, to carry an Ethernet 1 GBits/s channel over a synchronous network, the Ethernet channel may be mapped into 7 VC-4 container streams, each having a capacity of approximately 155 MBits/s.

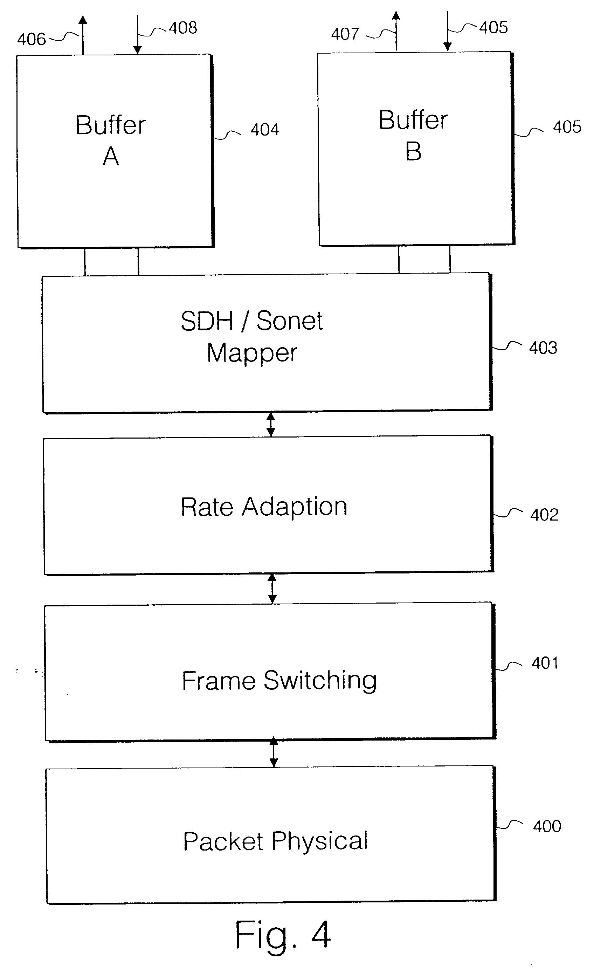

Components of a port card are illustrated schematically in Fig. 4 herein. The port card comprises a conventional packet data physical port 400, eg an Ethernet physical port; a frame switch device 401, which may comprise a conventional frame switch such as available from Plaintree or MMC; a rate adaption means 402 for adapting between a packet data rate and SDH rates equivalent to the rates of the virtual containers; an SDH payload mapper 403 for mapping the rate adapted data packets into and out of a plurality of streams of virtual containers via first and second memory areas, 404, 405. First and second memory areas 404, 405 preferentially comprise first in - first out buffers. The datacoms port card illustrated schematically in Fig. 4 is shown as being bi-directional, capable of transmitting and receiving a plurality of streams of virtual containers containing packet data. In the best mode implementation of Fig. 4, first and second memory areas 404, 405 are shown for interfacing with first and second synchronous transmit channels and first and second synchronous receive channels, indicated schematically by output arrows 406, 407 and input arrows 408, 409 respectively. Whilst the embodiment of Fig. 4 illustrates conversion between two synchronous channels, each comprising a stream of virtual containers, and a single stream of data packets in a transmit direction, it will be appreciated that a single stream of data packets may be multiplexed onto any suitable number of different streams of virtually concatenated virtual containers, by providing the appropriate corresponding number of memory areas and synchronous channels.

There will now be described operation of the specific implementation illustrated with reference to Fig. 3 herein, under conditions of normal operation where no path failures occur, for transmission of an input stream of data packets from source node 300 to destination node 302 over a plurality of streams of virtual containers.

In the embodiment shown in Fig. 3, an SDH path connected mode is shown in which transmission between transmitting entity 300 and receiving entity 302 is by first and second SDH paths 304, 305. In the path connected mode of operation, a complete path is protected over a plurality of SDH sections and over one or a plurality of intermediate synchronous node equipment, eg 301, 303. Under normal operation, where no faults occur on either the first or second paths 304, 305, higher rate data packet streams, eg Ethernet datapackets, are transmitted and received over the synchronous network as follows:

A stream of input data packets at a first data rate are received through a datacoms port of transmitting entity 300. The stream of data packets can be interrupted through the normal flow control provisions of the data packet protocol in operation, for example Ethernet IEEE 802.3. Thus, datacoms port of transmitting entity 300 can control the rate of entry of data packets into transmitting entity 300. The input stream of data packets are divided into a plurality of sets of data products, in this case into a first set of data packets and a second set of data packets, which are routed to first transmit memory area 306 and second transmit memory area 308 respectively, and which are loaded into a first stream of continuously generated virtual containers and a second stream of continuously generated virtual containers respectively. Incoming first data packets of the input data packet stream, each having a first data rate, eg a 100 MBits/s Ethernet, are input into first transmit memory area 306, which is emptied in real time into a first stream of continuously generated virtual containers at a second, lower data rate, eg 50 MBits/s, thereby continuously and in real time filling the first stream of virtual containers at the second, lower data rate of 50 MBits/s with the first set of data packets. The memory capacity of first transmit memory area 306 is preferably large enough to store at least one complete data packet, for inclusion in the payload of the first stream of virtual containers.

The first stream of virtual containers are transmitted over the first path 304 to receiving entity 302, where the payloads of the first virtual container stream are stored in first receive memory area 307. The memory capacity of first receive memory area 307 is preferably large enough to store at least one complete data packet. The data packet is collected from the plurality of payloads of the first stream of virtual containers in the first receive memory area 307. The first data packet is output from the first receive memory area at the higher data rate, eg 100 MBits/s in the case of the Ethernet data frame example herein. Output of the Ethernet data frame is by rate adaption from the plurality of virtual container payloads, and output on the Ethernet physical layer as described in the applicant's previous disclosures referred to hereinabove.

Simultaneously and in parallel with transmission of a first data packet from the input data packet stream, a second data packet is transmitted over the second path 305 over a second set of fibers and node equipment simultaneously with transmission of the first data packet. The second data packet is received sequentially with the first data packet. Whilst the first data packet is stored in first transmit memory area 306, the second data packet is loaded into second transmit memory area 308. The second data packet is loaded into a second stream of virtual containers, at a lower data rate, eg 50 MBits/s, than the packet data rate, and which are transmitted at the same time as the first stream of virtual containers, but over second path 305 between the transmit entity 300 and receive entity 302. The receive entity 302 receives the second stream of virtual containers carrying data from the second data packet and stores payloads of the second virtual container stream in a second receive memory area 309. Preferably the second receive memory area 309 has capacity large enough to store at least one complete data packet. The second data packet is reconstituted as a data frame in the second receive memory area 309, and is rate adapted and output onto the physical layer, eg Ethernet physical layer, at the higher packet data rate (eg 100 MBits/s in the case of the Ethernet example) in the same sequence as it was received in relation to the first data packet, thereby reconstituting the data packet stream. The first and second data packets output from receive entity 302 have the same data rate, eg 100 MBits/s, as they were originally input into transmit entity 300. The order of data packets between the input data packet stream and the output data packet stream is preserved. The timing between successive data packets of the output data packet stream is preferentially, but not essentially, preserved as being the same as for the input data packet stream.

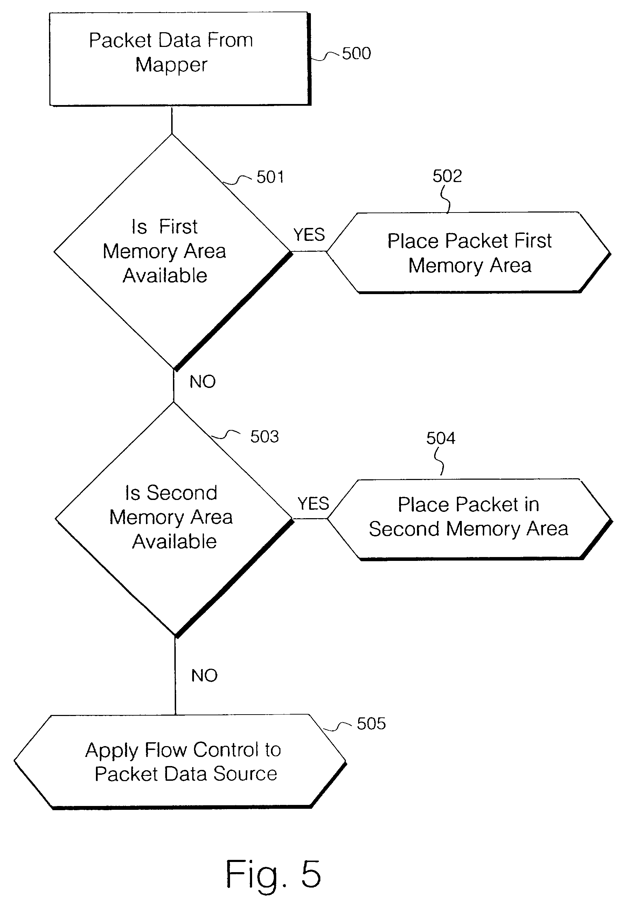

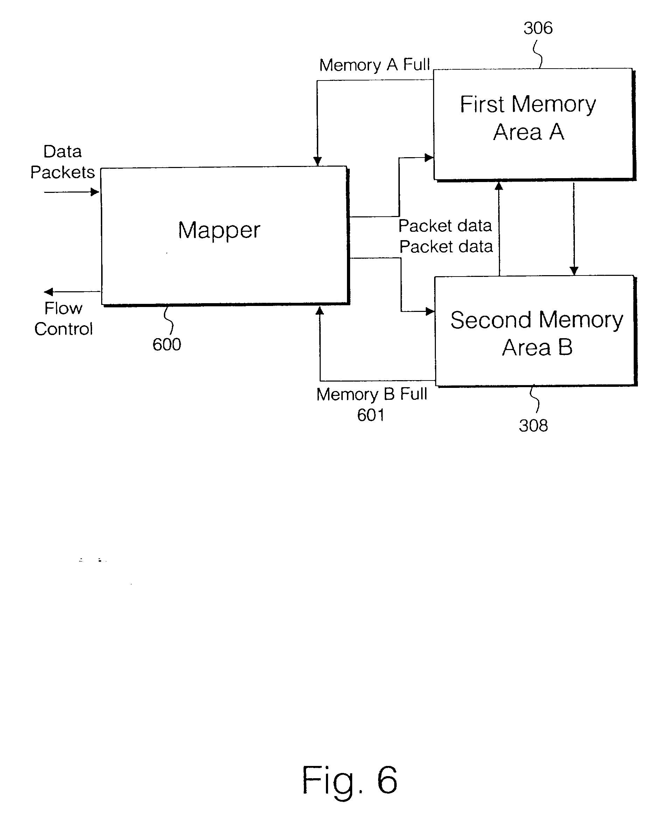

Referring to Figs. 5 and 6 herein, there is illustrated schematically how the input packet data stream is regulated and apportioned as between the first and second transmit memory areas 306, 308. Each memory area generates a "**memory full**" signal when a predetermined amount of data is stored in the memory. Similarly, when the occupancy of each memory area falls below a predetermined lower level, each memory area may generate a "**memory empty**" signal, indicating that the memory space is available to be filled by an input packet data. In step 501, the port card determines, in accordance with the latest received **memory empty** or **memory full** signal, whether first memory area 306 is available for storing an input packet data. If sufficient memory space is available, the packet data is transferred from mapper 600 to first memory area 306 in step 502. From the first memory area 306, the packet data is then transferred to the payloads of a first stream of continuously generated virtual containers, until the first memory area is emptied of the packet data. Meanwhile, a next, second. packet data input after the first packet data is routed to second memory area 308 in step 504, provided it is determined from the latest received **memory empty** or **memory full** signals in step 503 that sufficient vacant memory area is available in second memory area 308 to contain the second data packet. When both the first and second memory areas 306, 308 are occupied by packet data, in step 505, the mapper 600 applies flow control to the packet data source, so that the packet data source does not transmit any further packet data to mapper 600 until the flow control signal is released. Under prior art flow control mechanisms, flow control signals are continuously generated where it is required to stop packets from being transmitted. In the absence of any flow control signals, the packet data sources continue to transmit packets. For example, using the standard Ethernet flow control signals issued from mapper 602, a set of pause frames are generated, which are received by the Ethernet packet data source. The pause frames specify the duration over which packets should not be transmitted. When either the first or second memory areas empty their respective data packets into the corresponding respective first or second streams of virtual containers, such that a **memory empty** signal is generated from either the first or second memory area, flow control signals cease being generated at the mapper and a next data packet is input into either the first or second memory area, depending upon which one is empty. Thus, flow of data packets into and out of the first and second memory areas is self-regulating. Whichever memory area is capable of taking a next data packet (ie generates a **memory empty** signal) receives the next data packet for loading into the corresponding respective first or second stream of continuously generated virtual containers. Depending upon the amount of data occupancy where the **memory full** and **memory empty** signals are set to operate, the first or second memory area may take one or a plurality of packets. The number of packets which can be contained at any one time in a memory area is determined by the size of the memory area and the size of the packet. Since packets may not all be of a same size (ie not all of a same number of bytes), it may be that a large packet routed to the first memory area may occupy the first memory area for a period in which a plurality of smaller packets may be transferred through the second memory area and into the second virtual container stream.

Operating in accordance with the above method may have the advantage that an input data packet stream at a higher bitrate is transmitted over a synchronous network via a plurality of synchronous channels to a receive entity, using a plurality of virtual containers, each having a lower payload data rate than the data rate of the stream of input data packets and the output stream of data packets.

Operation of the example synchronous network of Fig. 3 under conditions of failure of one of the paths will now be described. Two types of failure can occur. Firstly, a path failure may occur due to failure of a fiber or node equipment on either of the paths 304, 305. That is to say, a failure occurs in the synchronous digital hierarchy transport network. Secondly, a failure may occur outside the SDH network in the receiving packet data network 311. Referring to Figs. 3 to 6 herein, the two failure modes are handled as follows:

The example of a failure on the second path 305 will be taken by way of example, although it will be understood by the person skilled in the art that in a system comprising a plurality of independent paths between source and destination, failure of any one path will be recovered similarly as described. Upon failure of any part of second path 305, receive entity 302 detects a path failure signal under the prior art path failure provisions of synchronous digital hierarchy ITU-T recommendations, namely either the AIS byte, path status byte, or path monitoring byte carried in the section overhead of the SDH frames.

On occurrence of a failure in the second path 305, the receiving entity 302 generates a path defect indicator byte (PDI) or a J1 or J2 path trace byte indicating that a fault has occurred on the path, and retransmits this back to the transmitting entity 300. That is to say the receiving entity 302 sends a signal back to the receiving entity 300 indicating that a fault has occurred on the second path. On receiving the path fault signal, the transmitting entity 300 ceases to load the contents of second memory area 308 into the second virtual container stream. Because the second memory area is not emptying, if it continues to receive packet data from the external packet data network 310, the second memory area becomes full and a "**memory full**" signal 601 is generated which is fed back to the mapper, which then applies flow control to the packet data source (external packet data network 310) so as not to transfer any further packets to the second memory area. Meanwhile, the data stored in the second memory area 308 is transferred over to the first memory area 306, as soon as first memory area 306 is emptied of its current packet. Flow control is applied to the packet data source network 310 by the mapper until the data packet transfer from the second memory area to the first memory area has been emptied out of the first memory area onto the first virtual container stream.

Subsequently input data packets from the input data packet stream are routed to the first memory area 306. Operation of transfer of data packets from first memory area 306 to the first virtual container stream then continues substantially as hereinbefore described under the normal operation. However, the input data packets are routed solely to the first memory area and not to the second memory area as well. Because the data packets are transported over the first path 304 in the first stream of virtual containers, the effective bit rate capacity of the SDH network is reduced under conditions of fault of the second path 305. Thus, where for example a stream of 100 MBits/s data rate packets are being transported over a stream of 50 MBits/s data rate virtual container payloads, the rate of input of the 100 MBits/s data packets into the mapper must be regulated by the flow control signal generated by the mapper (eg pause frames), to allow the data frames to be transferred into the slower 50 MBits/s virtual container streams transported over the first path 304. Thus, under conditions of fault, the bit rate capacity of the synchronous network is reduced as long as the fault on the second path persists, and data packets are input from the packet data network 310 at a reduced frequency compared with the normal mode of operation.

For the second type of fault, occurring on the receiving packet data network 311, the synchronous network remains unaffected, and the first and second streams of virtual containers received at first and second receive memory areas 307, 309 respectively result in stored data packets in the first and second receive memory areas at receive entity 302. These data packets cannot be transmitted onto the receiving packet data network 311, since a fault occurs on that network. Therefore, both receive memory areas at receive entity 302 become full. A higher level flow control signal (eg a pause frame in an Ethernet OSI layer 2 system) is returned over the corresponding return channels of first and second paths 304, 305 back to the transmit entity 300. On receipt of the higher level flow control signals, the transmit mapper 600 applies flow control at the packet data network level to the sending packet network 310 (eg sending pause frame signals where an Ethernet system is used) to prevent further packets being input into the transmitting entity 300.

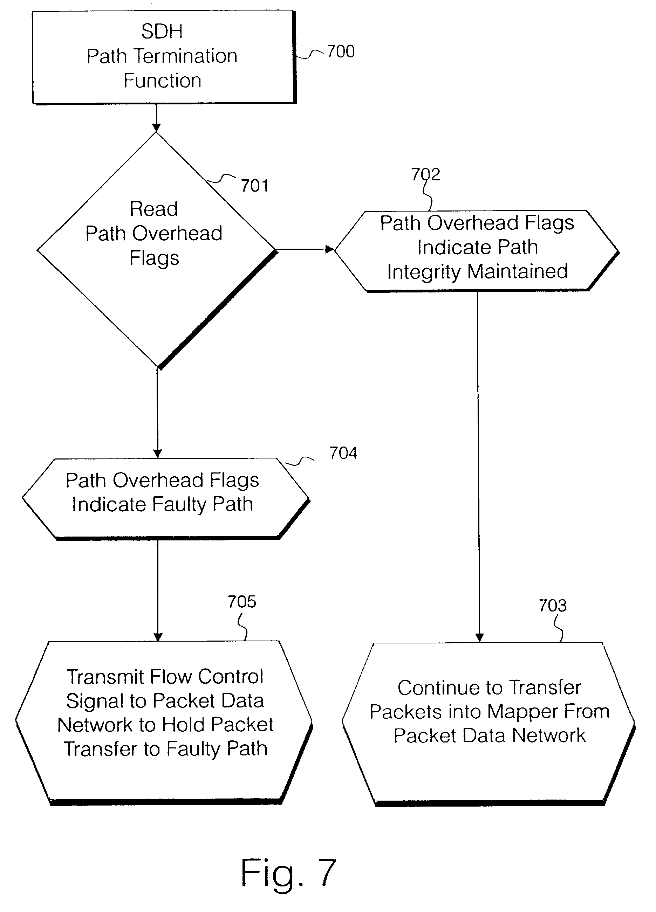

Referring to Fig. 7 of the accompanying drawings, there is illustrated a signal diagram for signaling across the network of Fig. 3 under conditions of either path failure and/or failure in the receiving packet data network 311. Where an SDH path termination function byte, eg a path defect indicator or a J1 or J2 trace byte is received by receiving entity 300 as a result of a path failure in the SDH network, the path termination function signal bytes are read by receiving entity 300 in step 701. If the path overhead flags indicate that path integrity is maintained in step 702, the mapper does not apply any flow control to the packet data source network and continues to transfer packets into the mapper from the packet data source network 703. However, if the path overhead flags indicate a fault on a path in step 704, in step 705 the mapper transmits a flow control signal to the source packet data network, which interrupts the input packet data steam onto the faulty path.

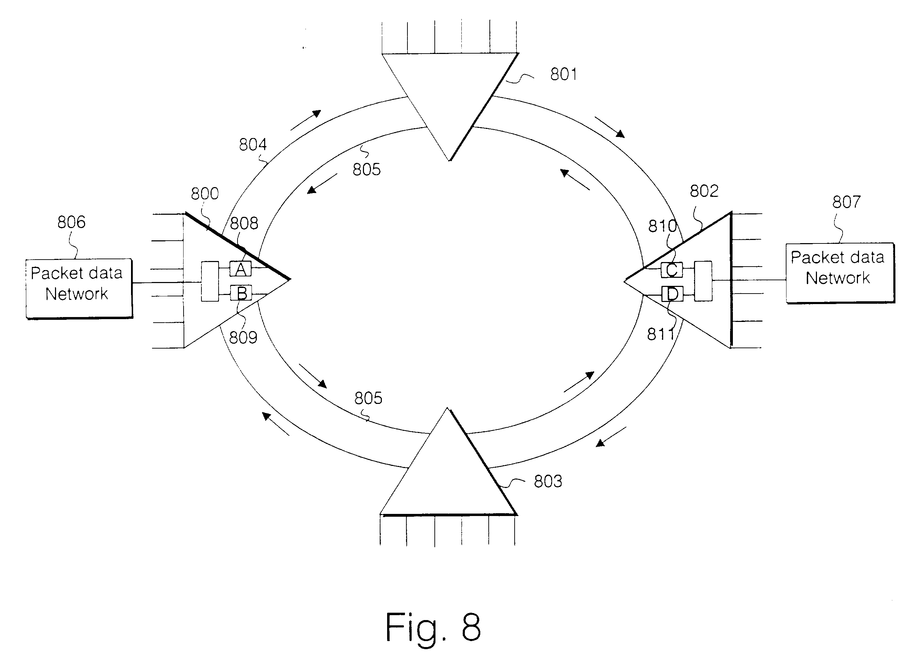

Referring to Fig. 8 herein, there is illustrated a second specific implementation according to the present invention, in which a plurality of SDH node entities 800-803 are linked via a section protection ring arrangement comprising first and second rings 804, 805. Whereas path protected modes are more prevalent in SDH in the areas of the network which are more concerned with access, section protection rings are conventionally found in areas of SDH networks which are used for broadband backbone transmission. Each section comprises first and second fibers connecting between a pair of communicating SDH node entities, eg 800, 801. In the second specific implementation of the present invention, each SDH node is provided with a datacoms data port as described hereinbefore with reference to Fig. 4 herein. A first transmit memory area 808 receives packets from an input data packet stream generated by packet data source network 806 and transmits a first stream of virtual containers in a clockwise direction around first synchronous ring channel 804. Meanwhile and simultaneously with transmission of the first virtual container stream, a second transmit memory area 809 receives input data packets from data packet source network 806, which are loaded into a second stream of virtual containers and are transmitted in an opposite, anti-clockwise direction around second synchronous channel 805.

Under normal operating conditions where no faults occur in the synchronous network or the data packet networks, an input data packet is stored in first transmit memory area 808 and transmitted over first synchronous digital channel 804 in a first stream of virtual containers, whilst simultaneously a second data packet stored in second transmit memory area 809, may be transmitted in an opposite direction around second transmit channel 804 in a second stream of virtual containers. Ingress and egress of data packets to and from the synchronous part of the network is controlled by generation of **memory full** and **memory empty** signals substantially similarly as hereinbefore described with reference to Fig. 3 herein.

At SDH receiving entity 802, which may for example be an add-drop multiplexer, there are provided first and second receive memory areas 810, 811 respectively, connected to the first and second synchronous channels 804, 805 respectively. A first stream of virtual containers on the first channel is received by the first receive memory area 810, whilst a second stream of virtual containers moving in an opposite direction on the second channel is received by second receive memory area 811.

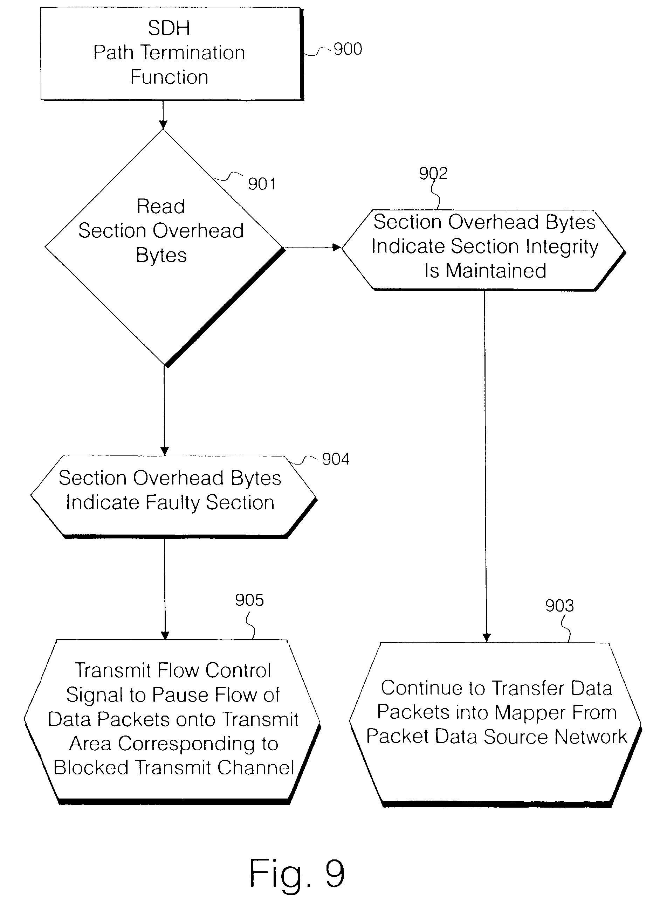

Referring to Fig. 9, in normal no fault operation, section overhead bytes of the SDH path termination function 900 are continuously monitored in step 901, and as long as the section overhead bytes indicate that section integrity is maintained in step 902, then data is continued to be transferred from packet data network 806 into the transmit entity in step 903.

Referring to figs. 8 and 9 herein, operation of the second specific implementation under conditions of a fault on a section of the synchronous network will now be described.

In the event of a failure on a node or fiber of a section, for example failure of node 803, the second stream of virtual containers sent via second synchronous channel 805 fails to arrive at the receiving entity 802. Receiving entity 802 monitors a section trace byte JO in the section overhead of the SDH frames. On detecting a section failure from monitoring the section overhead byte, receiving entity 802 transmits an alarm indication signal (AIS) back to transmitting entity 800 over the intact sections, passing through node 801. On receiving the alarm indication signal provided by the conventional SDH section termination function, 900, in step 901 transmitting entity 800 reads the section overhead byte and if the section overhead byte indicates a faulty section in step 904, then in step 905 the mapper of the datacoms port of receiving entity 800 transmits a flow control signal to the packet data source network 806 in order to interrupt the flow of data packets to the second memory area whose transmission path is blocked by the faulty section. During this process, data packets continue to be input to first transmit memory area 808, which maintains transmission over first synchronous ring channel 804 through the unaffected sections passing through intact node 801 and to receiving entity 802 to be received by first receive memory area 810. On detecting a fault on the second synchronous transmit channel 805, any data packets stored in second transmit memory area 810 are transferred to first transmit memory area 809, similarly as described with reference to Fig. 6 hereinbefore. Transmission of data packets from source packet data network 806 to destination packet data network 807 continues, but carried only over the first virtual container stream on the first synchronous transmit channel. The effective total bitrate capacity of the synchronous network is reduced under fault condition compared with under normal operations. Consequently, the frequency of input of data packets to the synchronous network is reduced, since the effective bitrate capacity of the synchronous channels is reduced due to the faulty section. For example, where a 100 MBits/s Ethernet data frame packet is input into transmit entity 800, under normal operation with no fault on the synchronous network, where the 100 MBits/s data packets are transmitted over first and second streams of virtual containers, each having a payload data rate of 50 MBits/s, transmission over the synchronous network may be at substantially a same or similar rate in total (ie 2 x 50 MBits/s virtual container streams) as in the Ethernet packet data source network. However, under conditions of section fault, where one of the streams of virtual containers cannot reach receive entity 802, the effective bit rate capacity of data transmission over the synchronous network may be halved, because only one stream of virtual containers is available to carry the data packets, and so the effective rate of data transmission over , the synchronous part of the network may fall to 50 MBits/s, ie the approximate virtual container payload data rate for one stream of virtual containers.

Under conditions of a fault on the receiving packet data network, where the synchronous network remains fault-free, operation is as follows:

Under conditions of section integrity for each of the transmit channels 804 and 805 but under fault conditions on the destination packet data network 807, first and second receive memory areas 810, 811 are incapable of emptying, since flow control is applied by the destination packet data network 807. Under these conditions, similarly as in the case of the first specific implementation described with reference to Fig. 3 herein, receive entity 802 generates flow control signals, eg pause frame signals in the case of Ethernet, which are sent back to the transmit entity 800 over the return channels of the first or second rings. Upon receipt of the pause control signals, which are controlled at the level of the packet data network, transmitting entity 800 generates flow control signals to the packet data source network 806 to prevent further input of data packets into the first and second transmit memory areas. When the pause control signals cease being received from the synchronous receiving entity 802, the synchronous transmit entity ceases to apply flow control signals to the packet data network and input of the packet stream to transmit entity 800 resumes.

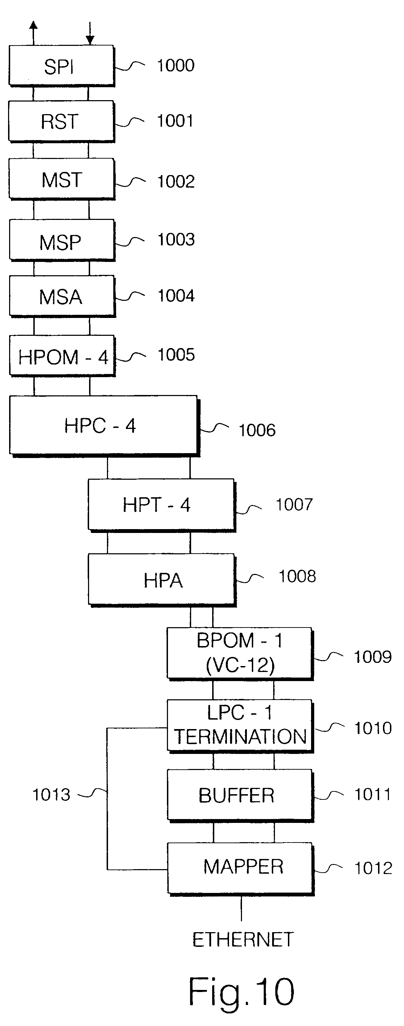

Referring to Fig. 10 herein, there is illustrated schematically a layout of an application specific integrated circuit (ASIC) implementation of a multiplexer model in accordance with ITU-T recommendation G.783, modified to include a plurality of memory areas, and a mapper on a datacoms port card as described with reference to the first or second specific implementations of the present invention. To gain access to the synchronous channels, there is provided a synchronous physical interface 1000 communicating with a regenerator section termination 1001, which communicates with a multiplex section termination 1002. The multiplexer comprises a multiplex section protection element 1003; a multiplex section adaptation element 1004; a higher order path termination 1005; and a higher order path connection 1006. For mapping to a VC12 stream, as shown in Fig. 10, a plurality of memory areas 1011 and a mapper 1012 communicate with a lower order path termination 1010. Lower order path termination 1010 sends a path termination or section termination signal 1013 to mapper 1012 upon condition of a fault on a path or section. Lower order path termination 1010 communicates with higher order path termination 1007 via higher order path adaptation 1008.

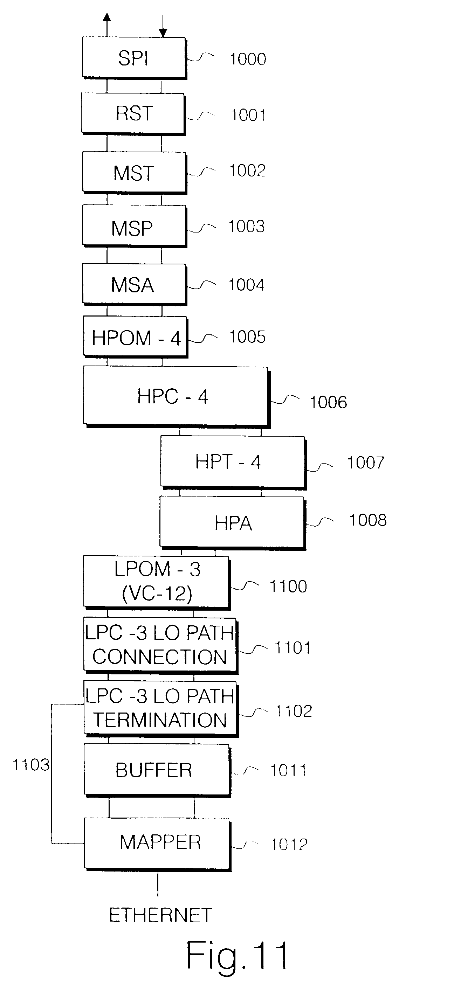

Referring to Fig. 11, for transfer of a packet data stream to a plurality of VC-3 streams, mapper 1012 and a plurality of memory areas 1011 communicate with an LPT-3 lower order path termination 1102, from which mapper 1012 also receives path termination function signals and section termination function signals 1103, LPT-3 lower order path termination 1102 communicates via lower order path connection 1101 and lower order path supervisory termination 1100 to higher order path adaptation 1008. Thereafter, access to the synchronous digital channel is as described with reference to Fig. 10.

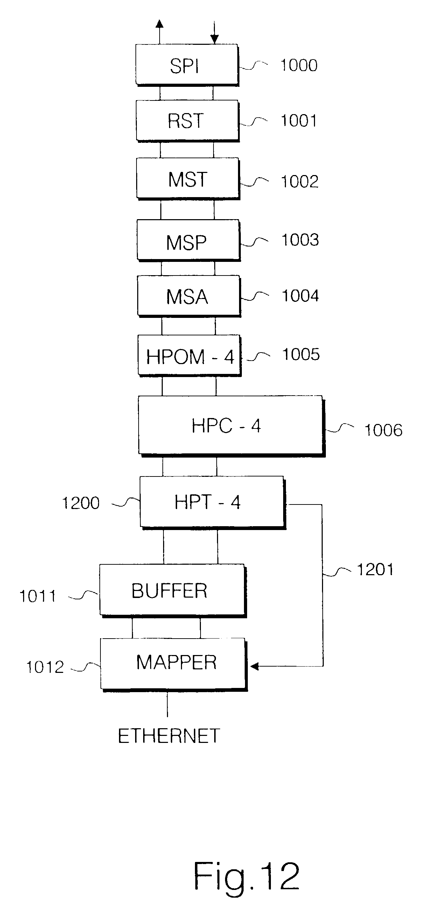

Referring to Fig. 12 herein, for mapping of a packet data stream to a plurality of VC-4 streams mapper 1012 communicates with a plurality of memory areas 1011 which communicate with a HPT-4 higher order path termination, from which mapper 1012 also receives path termination or section termination signals 1201. Thereafter, higher order path termination HPT-4 1200 communicates with higher order path connection 1006 and accesses the synchronous digital channels by a same route as with reference to Fig. 10 herein.

In practice, in a practical synchronous digital hierarchy multiplexer equipped with datacoms port as described hereinbefore, the plurality of memory areas and mapper are provided on the application specific integrated circuit, and are capable of communicating with each of the LPC-1 termination 1010, the LPC-3 lower order path connection 1101, and the higher order path termination HPT-4 means of the multiplexer, thereby avoiding duplication of memory area and multiplexer functionality. The plurality of transmit and receive memory areas may be implemented separately in the ASIC, or may be implemented as a single memory area, in which case a single block of memory is divided into separate memory areas for transmit and receive, the memory as a whole operating bi-directionally.

## Claims

1. A method of transmitting a stream of data packets over a plurality of synchronous channels, said method comprising the steps of:
inputting a first data packet having a first data rate to a first transmit memory area;
mapping a said first data packet into a first virtual container stream at a second data rate, said second data rate being lower than said first data rate;
transmitting said virtual container stream over a first synchronous channel;
inputting a second data packet having said first data rate to a second transmit memory area;
mapping said second data packet to a second stream of virtual containers, at said second data rate; and
transmitting said second stream of virtual containers over a second synchronous channel; and
regulating a rate of admission of said first and second data packets into said memory areas according to a data occupancy level of at least one said memory area.

2. The method as claimed in claim 1, wherein said step of mapping said first data packet into said first virtual container stream and said step of mapping said second data packet into said second virtual container stream occur in parallel.

3. The method as claimed in claim 1, wherein said step of inputting a first data packet into said first transmit memory area and said step of inputting said second data packet into said second transmit memory area occur sequentially with each other.

4. The method as claimed in claim 1, comprising the step of buffering a said data packet in a first in first out buffer.

5. The method as claimed in claim 1, wherein said step of regulating a rate of admission of said first and second data packets into said memory areas comprises: when a data occupancy of a said memory area falls below a first pre-determined level, admitting a said data packet into said transmit memory area.

6. The method as claimed in claim 1, wherein said step of regulating a rate of admission of said first and second data packets into a said memory area comprises: when a data occupancy of said transmit memory area is above a second predetermined level, preventing admission of a said data packet into a said memory area.

7. The method as claimed in claim 1, wherein said step of regulating a rate of admission of said first and second data packets into a said memory area comprises: generating a flow control signal in a form recognisable by a data packet source, for preventing said data packet source from transmitting a next packet to said transmit memory area.

8. The method as claimed in claim 1, wherein transmission of said first stream of virtual containers over said first synchronous channel and transmission of said second stream of virtual containers over said synchronous channel occurs simultaneously and in parallel.

9. A method of transmitting packet data of a first data rate over a plurality of synchronous channels each operating at a second data rate, wherein said second data rate is lower than said first data rate, said method comprising the steps of:
receiving a stream of data packets each of said first data rate into a transmit memory area;
mapping said stream of data packets into a plurality of streams of virtual containers each of said second data rate;
transmitting said plurality of streams of virtual containers over a plurality of synchronous channels;
wherein, under conditions of a fault occurring on a said synchronous channel, redirecting said stream of data packets over at least one remaining one of said plurality of synchronous channels, on which no faults occur.

10. A method of transmitting a stream of data packets, each said data packet of a first data rate over a plurality of synchronous channels each operating at a second data rate, wherein said second data rate is lower than said first data rate, said method comprising the steps of:
receiving a first set of data packets each of said first data rate into a first transmit memory area;
mapping said first set of data packets into a first stream of virtual containers;
transmitting said first stream of virtual containers over a first synchronous channel;
receiving a second set of data packets into a second transmit memory area;
mapping said second set of data packets into a second stream of virtual containers;
transmitting said second stream of virtual containers over a second synchronous channel;
wherein, under conditions of a fault occurring on said first synchronous channel, operating said steps of:
in response to a received fault signal relating to a fault on said first synchronous channel, generating a flow control signal for preventing receipt of a next data packet into said first transmit memory area.

11. The method as claimed in claim 10, further comprising the step of: in response to said received fault signal, transferring said stored first data packet from said first transmit memory area to said second transmit memory area.

12. The method as claimed in claim 10, wherein said generated flow control signal is recognisable by a packet data source as a signal for interrupting a flow of data packets.

13. The method as claimed in claim 10, comprising, under said fault conditions, operating steps of:
receiving said first and second sets of data packets into said second transmit memory area;
mapping said first and second sets of data packets into said stream of second virtual containers; and
transmitting said stream of second virtual containers over said second synchronous channel.

14. The method as claimed in claim 10, wherein under said fault condition comprising the step of: generating a second flow control signal for controlling a flow of said first and second data packet sets into said second transmit memory area such that an average rate of receipt of said first and second data packets into said second transmit memory area is less than or equal to an average rate of output of said first and second data packets onto said second synchronous transmission channel.

15. A method of transmitting a stream of data packets over a plurality of synchronous channels, said method comprising the steps of:
inputting a stream of data packets each having a first data rate, into a transmit memory area;
storing said plurality of data packets in said transmit memory area;
outputting said plurality of data packets from said transmit memory area onto a plurality of virtual container streams, each said virtual container stream operating at a second data rate, said second data rate being lower than said first data rate;
receiving an egress flow control signal indicating congestion at a receive entity;
in response to said egress flow control signal, generating an ingress flow control signal for controlling a rate of admission of said data packets into said transmit memory area.

16. A method of receiving packet data over a plurality of synchronous data channels, said method comprising the steps of:
receiving a first stream of virtual containers over a first synchronous channel, individual ones of said first stream of virtual containers each having a second data rate;
storing a plurality of payloads of said first stream of virtual containers in a first receive memory area said plurality of payloads comprising a first complete data packet;
outputting said first data packet at a first data rate greater than said second data rate of said first stream of virtual containers;
receiving a second stream of virtual containers over a second synchronous channel, individual ones of said second stream of virtual containers each having a second data rate;
storing a plurality of payloads of said second stream of virtual containers in a second receive memory area said plurality of payloads comprising a second complete data packet; and
outputting said second data packet at a first data rate greater than said second data rate of said second set of virtual containers.

17. A method of receiving packet data over a plurality of synchronous data channels, said method comprising the steps of:
receiving a plurality of said data packets carried in a plurality of streams of virtual containers over said plurality of synchronous channels, each said virtual container stream having a second data rate;
storing a plurality of payloads of said plurality of virtual containers in a memory area;
reconstituting a said data packet from a said plurality of virtual container payloads;
outputting said data packet onto a data packet network at a first data rate, said first data rate being higher than said second data rate;
wherein, under conditions of a fault on at least one of said synchronous channels, operating the steps of:
generating a fault indicator signal indicating a fault on said synchronous channel;
transmitting said fault indicator signal over an intact synchronous channel on which no fault occurs.

18. The method as claimed in claim 17, wherein said plurality of virtual container streams are virtually concatenated together.

19. A method of receiving packet data over a plurality of synchronous data channels, said method comprising the steps of:
receiving a plurality of streams of virtual containers over a plurality of synchronous channels, each said virtual container stream having a second data rate;
storing a plurality of payloads of said virtual containers in a receive memory area;
reconstituting a data packet from said plurality of stored virtual container payloads;
outputting said reconstituted data packet, said data packet having a first data rate, said first data rate being higher than said second data rate;
receiving a flow control signal from an external packet data network;
upon receipt of said flow control signal from said external packet data network, generating an egress flow control signal; and
transmitting said egress flow control signal over a synchronous channel.

20. The method as claimed in claim 19, wherein said plurality of virtual container streams comprise a plurality of virtually concatenated virtual containers.

21. A method of communicating data over a synchronous network, said method comprising the steps of, under normal no-fault conditions:
receiving a first stream of virtual containers over a first synchronous channel, said first stream of virtual containers received at a second data rate;
storing payload data of said first stream of virtual containers until a complete data packet is received;
outputting said data packet at a first data rate, said first data rate being greater than said second data rate of said first stream of virtual containers;
receiving a second stream of virtual containers over a second synchronous channel, said stream of virtual containers received at said second bitrate;
storing said payload data of said second stream of virtual containers until a complete data packet is received;
outputting said second data packet at a first data rate, said first data rate being greater than said second data rate of said received second stream of virtual containers; and
under conditions of a fault on said first synchronous channel, performing the steps of receiving said first stream of virtual containers and said second stream of virtual containers on said second synchronous channel; and
outputting said first and second data packets at said first data rate, at less frequent intervals, than under said normal operating conditions.

22. A method of transmitting packet data over a synchronous communications network said method comprising the steps of:
storing a first data packet having a first data rate in a first transmit memory area;
mapping a said stored data packet into a first virtual container stream at a second data rate, said second data rate being lower than said first data rate;
transmitting said virtual container stream over a first synchronous channel;
storing a second data packet having said first data rate into a second transmit memory area;
mapping said second stored data packet to a second stream of virtual containers, said second stream of virtual containers being at said second data rate; and
transmitting said second stream of virtual containers over a second synchronous channel, wherein transmission of said first stream of virtual containers over said first data channel and transmission of said second stream of virtual containers over said second synchronous channel occurs simultaneously and in parallel.

23. A method of receiving packet data over a plurality of synchronous data channels in a synchronous communications network, said method comprising the steps of:
receiving a first stream of virtual containers over a first synchronous channel, said first stream of virtual containers received at a second data rate
storing payloads of said first stream of virtual containers in a first received memory area until a complete data packet is received;
outputting said first data packet at a data rate greater than a said second data rate of said first stream of virtual containers;
receiving a second stream of virtual containers over a second synchronous channel, said second stream of virtual containers received at said second data rate;
storing payloads of said stream of virtual containers in a second receive memory area until a second complete data packet is received; and
outputting said second data packet at a data rate greater than said second data rate of said second set of virtual containers.

24. An interface apparatus for interfacing between a data packet network operating a plurality of data packets at a second data rate; and a synchronous network operating a plurality of virtual containers each having a first data rate, said interface apparatus comprising:
a mapper means for mapping a stream of said data packets between said data packet network and said synchronous network;
a buffer memory for storing said data packets between said data packet network and said plurality of synchronous channels; and
means for generating a flow control signal recognisable for controlling a flow of said data packets.

25. The interface apparatus as claimed in claim 24, wherein said buffer memory area comprises a plurality of separate transmit memory areas, each assigned to a corresponding respective synchronous channel, and a plurality of receive memory areas, each said receive memory area assigned to a corresponding respective synchronous channel.

26. The interface apparatus as claimed in claim 24, wherein
said buffer memory area comprises a plurality of memory areas; and
a plurality of flow control signal generation means,
wherein said flow control signal generation means operate to generate a flow control signal corresponding to a respective said memory area, whenever said corresponding respective memory area reaches a predetermined data occupancy level.

27. The interface apparatus as claimed in claim 24, wherein said buffer memory operates to generate a signal upon achieving a predetermined level of data occupancy.
